# EUROPEAN PATENT APPLICATION

(11) **EP 4 415 396 A1**
(43) Date of publication of application: **14.08.2024**
(21) Application number: 21959738.2
(22) Date of filing: 09.10.2021
(51) Int. Cl.: H04W 4/38

(54) **SENSING SERVICE PROVIDING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LIU, Jianning, Beijing 100085 (CN); SHEN, Yang, Beijing 100085 (CN)
(74) Representative: Gunzelmann, Rainer
(86) International application number: PCT/CN2021/122919
(87) International publication number: WO 2023/056648

(57) **Abstract**

Provided in the embodiments of the present disclosure are a sensing service providing method and apparatus, and a communication device and a storage medium. The sensing service providing method executed by a UE comprises: sending a sensing request to an access management function (AMF); receiving a sensing parameter, which is returned by a target SF that is selected by the AMF; and providing a sensing service according to the sensing parameter.

## Description

### TECHNICAL FIELD

The disclosure relates to, but is not limited to, the field of wireless communication technologies, and in particular, to methods and apparatuses for providing a sensing service, related communication devices and related storage media.

### BACKGROUND

At present, with the development of artificial intelligence (AI) technology, it has greatly promoted the intelligence of many industries. Sensing technology has become an important technical basis, such as radar-based technology, which is widely used in fields of intelligent transportation and automatic driving. The current radar-based sensing technology mainly relies on dedicated radar equipment, which is expensive and inflexible in deployment, and is mainly used in specific scenarios.

In the era of mobile Internet, with the development of mobile communication, there will be a larger number of mobile terminals and mobile base stations in the future. At the same time, with the continuous emergence of new services, the demand for sensing is gradually increasing. For example, surrounding objects may be perceived using the sensing service in the dark or indoor sensing human motion commands may be generated to control smart furniture, which provides great convenience for daily life.

### SUMMARY

Embodiments of the disclosure provide methods and apparatuses for providing a sensing service, related communication devices and related storage media.

In a first aspect, embodiments of the disclosure provide a method for providing a sensing service, performed by a user equipment (UE). The method includes:
sending a sensing request to an Access Management Function (AMF);
receiving a sensing parameter returned by a target sensing function (SF) selected by the AMF; and
providing a sensing service based on the sensing parameter.

In a second aspect, embodiments of the disclosure provides a method for providing a sensing service, performed by an Access Management Function (AMF). The method includes:
receiving a sensing request from a user equipment (UE);
determining a target sensing function (SF); and
sending the sensing request to the target SF.

In a third aspect, embodiments of the disclosure provide a method for providing a sensing service, performed by a sensing function (SF). The method includes:
receiving a sensing request of a user equipment (UE) provided by an Access Management Function (AMF);
determining a sensing parameter based on the sensing request; and
sending the sensing parameter to the UE through the AMF, in which the sensing parameter is configured to be used for the UE to provide a sensing service.

In a fourth aspect, embodiments of the disclosure provide an apparatus for providing a sensing service. The apparatus includes:
a first sending module, configured to send a sensing request to an Access Management Function (AMF);
a first receiving module, configured to receive a sensing parameter returned by a target sensing function (SF) selected by the AMF; and
a providing module, configured to provide a sensing service based on the sensing parameter.

In a fifth aspect, embodiments of the disclosure provide an apparatus for providing a sensing service. The apparatus includes:
a second receiving module, configured to receive a sensing request from a user equipment (UE);
a first determining module, configured to determine a target sensing function (SF); and
a second sending module, configured to send the sensing request to the target SF.

In a sixth aspect, embodiments of the disclosure provide an apparatus for providing a sensing service. The apparatus includes:
a third receiving module, configured to receive a sensing request of a user equipment (UE) provided by an Access Management Function (AMF);
a third determining module, configured to determine a sensing parameter based on the sensing request; and
a third sending module, configured to send the sensing parameter to the UE through the AMF, in which the sensing parameter is configured to be used for the UE to provide a sensing service.

In a seventh aspect, embodiments of the disclosure provide a communication device. The communication device includes a processor, a transceiver, a memory, and an executable program stored on the memory and capable of being run by the processor. When the processor runs the executable program, the methods for providing a sensing service according to any of the first aspect to the third aspect are performed.

In an eighth aspect, embodiments of the disclosure provide a computer storage medium. The computer storage medium has an executable program stored thereon. After the executable program is executed by a processor, the methods for providing a sensing service according to any of the first aspect to the third aspect are performed.

In the technical solution according to embodiments of the disclosure, the UE may send the sensing request to the AMF, the sensing request may trigger the AMF to determine the target SF corresponding to the sensing request, the target SF may determine, based on the sensing request, the sensing parameter for providing the sensing service and return the sensing parameter to the UE. Therefore, the UE may provide the sensing service based on the sensing parameter provided by the appropriate target SF determined by the AMF, thereby ensuring that the sensing service provided by the UE meets the security requirements and/or quality requirements to the sensing service.

It is understandable that both the foregoing general description and the following detailed description are illustrative and explanatory, and are not intended to limit embodiments of the disclosure.

### BRIEF DESCRIPTION OF THE DRAWINGS

The accompanying drawings, which are incorporated in and constitute a part of this specification, illustrate embodiments consistent with the disclosure and together with the description serve to explain principles of embodiments of the disclosure.
FIG. 1 is a schematic structural diagram of a wireless communication system according to an embodiment.
FIG. 2 is a schematic diagram illustrating a system architecture according to an embodiment.
FIG. 3 is a schematic flowchart illustrating a method for providing a sensing service according to an embodiment.
FIG. 4A is a schematic diagram related to a method for providing a sensing service based on radar signals according to an embodiment.
FIG. 4B is a schematic diagram related to a sensing service provided by a user equipment (UE) according to an embodiment.
FIG. 5 is a schematic flowchart illustrating a method for providing a sensing service according to an embodiment.
FIG. 6 is a schematic flowchart illustrating a method for providing a sensing service according to an embodiment.
FIG. 7 is a schematic flowchart illustrating a method for providing a sensing service according to an embodiment.
FIG. 8 is a schematic flowchart illustrating a method for providing a sensing service according to an embodiment.
FIG. 9 is a schematic flowchart illustrating a method for providing a sensing service according to an embodiment.
FIG. 10 is a schematic structural diagram illustrating an apparatus for providing a sensing service according to an embodiment.
FIG. 11 is a schematic structural diagram illustrating an apparatus for providing a sensing service according to an embodiment.
FIG. 12 is a schematic structural diagram illustrating an apparatus for providing a sensing service according to an embodiment.
FIG. 13 is a schematic structural diagram illustrating a UE according to an embodiment.
FIG. 14 is a schematic structural diagram illustrating a network element according to an embodiment.

### DETAILED DESCRIPTION

Reference will now be made in detail to embodiments, examples of which are illustrated in the accompanying drawings. When the following description refers to the accompanying drawings, the same numerals in different drawings refer to the same or similar elements unless otherwise indicated. The implementations described in the following embodiments do not represent all implementations consistent with embodiments of the disclosure Rather, they are merely examples of apparatuses and methods consistent with aspects of embodiments of the disclosure as recited in the appended claims.

Terms used in embodiments of the disclosure are for the purpose of describing specific embodiments only, and are not intended to limit embodiments of the disclosure. As used in the examples of the disclosure and the appended claims, the singular forms "a," "an" and "the" are also intended to include the plural forms unless the context clearly dictates otherwise. It is understandable that the term "and/or" as used herein refers to and includes any and all possible combinations of one or more of the associated listed items.

It is understandable that although embodiments of the disclosure may use the terms "first," "second," "third," etc. to describe various information, the information should not be limited to these terms. These terms are only used to distinguish information of the same type from one another. For example, without departing from the scope of embodiments of the disclosure, first information may also be called second information, and similarly, second information may also be called first information. Depending on the context, the word "if" as used herein may be interpreted as "at" or "when" or "in response to a determination."

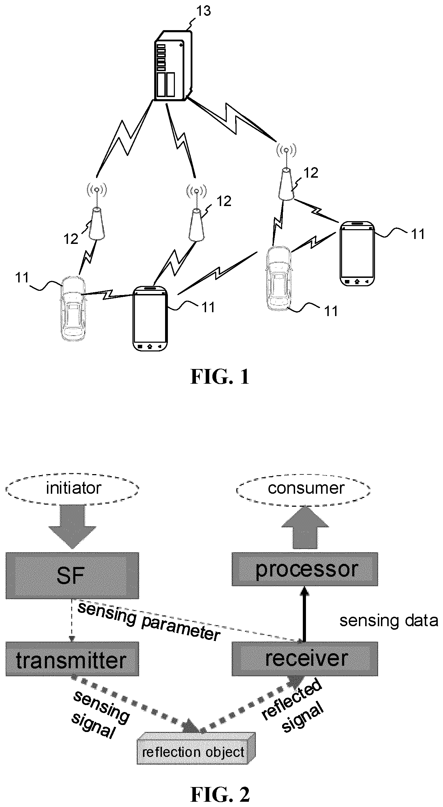

FIG. 1 is a schematic structural diagram of a wireless communication system according to an embodiment of the disclosure. As illustrated in FIG. 1, the wireless communication system, which is a communication system based on cellular mobile communication technology, may include: several user equipment (UEs) 11 and several access devices 12.

UE 11 may be a device that provides voice and/or data connectivity to a user. Each UE 11 may communicate with one or more core networks via a Radio Access Network (RAN). UE 11 may be an Internet of Things UE, such as a sensor device, a mobile phone (or called a "cellular" phone) or a computer having an Internet of Things UE, such as a fixed, portable, pocket, hand-held, built-in or vehicle-mounted device. For example, a Station (STA), a subscriber unit, a subscriber station, a mobile station, a mobile, a remote station, an access point, a remote terminal or a remote UE, an access terminal or an access UE, a user terminal, a user agent, a user device, or a UE. Or, UE 11 may be a device for an unmanned aerial vehicle. Or, UE 11 may be a vehicle-mounted device, such as a trip computer with a wireless communication function or a wireless communication device connected externally to the trip computer. Or, UE 11 may be a roadside device, such as a street lamp, a signal lamp, or other roadside devices with a wireless communication function.

The access device 12 may be a network side device in a wireless communication system. The wireless communication system may be a 4^{th} generation mobile communication (4G) system, also known as a Long Term Evolution (LTE) system. Or, the wireless communication system may be a 5G system, also called new radio (NR) system or 5G NR system. Or, the wireless communication system may be a next-generation system of the 5G system. The access network in the 5G system may be called New Generation-Radio Access Network (NG-RAN). Or, the MTC system.

The access device 12 may be an evolved access device (eNB) adopted in a 4G system. Or, the access device 12 may be an access device (gNB) adopting a centralized and distributed architecture in a 5G system. When the access device 12 adopts the centralized and distributed architecture, it generally includes a central unit (CU) and at least two distributed units (DUs). The centralized unit is provided with protocol stacks of a Packet Data Convergence Protocol (PDCP) layer, a Radio Link Control (RLC) layer, a Media Access Control (MAC) layer. The distributed unit is provided with a protocol stack of a Physical (PHY) layer. The specific implementation manner of the access device 12 is not limited in embodiments of the disclosure.

A wireless connection may be established between each access device 12 and each UE 11 through a wireless air interface. In different embodiments, the wireless air interface is a wireless air interface based on the 4G standard, the wireless air interface is a wireless air interface based on the 5G standard, such as a new radio, or the wireless air interface is a wireless air interface based on a next-generation standard of the 5G.

In some embodiments, an End to End (E2E) connection may be established between the UEs 11, such as a vehicle to everything (V2X) communication including a vehicle to vehicle (V2V) communication, a vehicle to Infrastructure (V2I) communication, and a vehicle to pedestrian (V2P) communication.

In some embodiments, the above wireless communication system may further include a network management device 13.

Several access devices 12 are connected to the network management device 13 respectively. The network management device 13 may be a core network device of the wireless communication system. For example, the network management device 13 may be a Mobility Management Entity (MME). Or, the network management device may be other core network devices, such as a Serving GateWay (SGW), a Public Data Network GateWay (PGW), a Policy and Charging Rules Function (PCRF), a Home Subscriber Server (HSS) or the others. The implementation form of the network management device 13 is not limited in embodiments of the disclosure.

The methods according to embodiments of the disclosure may be applied to, but is not limited to, the system architecture illustrated in FIG. 2.

Initiator triggers a sensing service based on application requirements, which may be outside the communication system corresponding to 3GPP.

Consumer receives and consumes output data of the sensing service. The output data may include: sensing data and/or a sensing result generated based on sensing data.

Sensing function (SF) may be any functional entity on the network side, which is a kind of network function. The SF determines a sensing model and determines sensing parameters for a transmitter (or called transmitting device or sender) and a receiver (or called receiving device or reception device) based on information/requirements provided by the initiator. The sensing parameters may at least need to coordinate the receiving/transmitting of a sensing signal between the transmitter and the receiver.

Transmitter transmits a sensing signal based on the sensing parameters received from the SF.

Receiver receives a reflected signal based on the sensing parameters received from the SF, and send sensing data to a processor if there is the sensing data.

Processor processes the sensing data received from the receiver and output a sensing result. It is noteworthy that the processor here may include one or more processors, or one or more processing devices.

It is noteworthy that one device may act as one or more of the roles of the initiator, the consumer, the transmitter, the receiver, and the processor.

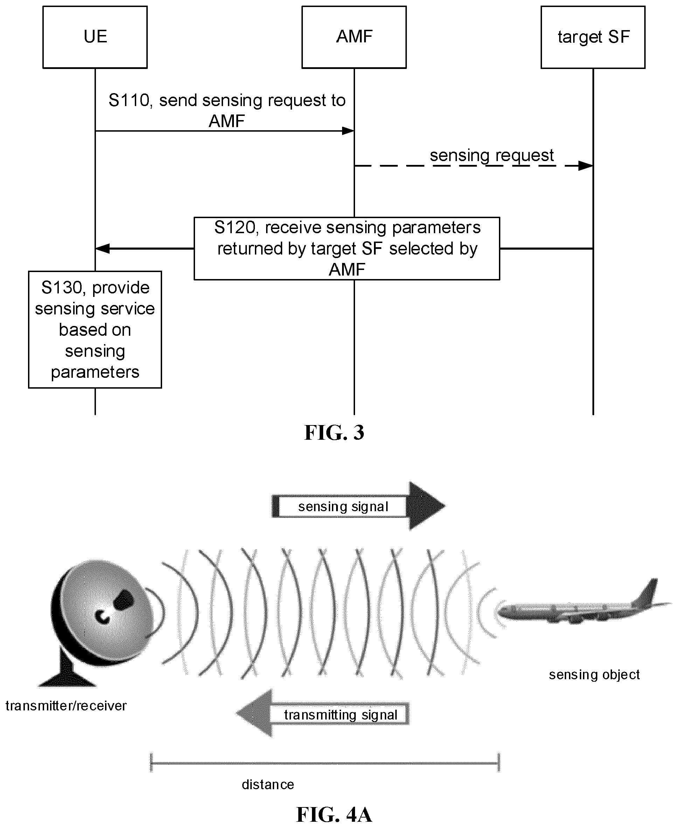

As illustrated in FIG. 3, embodiments of the disclosure provide a method for providing a sensing service, performed by a UE. The method includes the following.

At block S110, a sensing request is sent to an Access Management Function (AMF).

At block S 120, a sensing parameter returned by a target Sensing Function (SF) selected by the AMF is received.

At block S130, a sensing service is provided based on the sensing parameter.

The UE may be various types of terminals. For example, the UE may be a mobile phone, a tablet computer, a vehicle-mounted device, a smart home device, a smart office device, a ground-walking robot or a low-flying aircraft.

When the UE needs the sensing service or when the UE participates in providing the sensing service, the UE may send the sensing request to the AMF.

The sensing service may be detecting a distance, an orientation and/or a contour of a sensing object through transmission and reception of a sensing signal.

The sensing signal is a wireless signal. For example, the wireless signal includes, but is not limited to: a radar signal, a laser signal, an ultrasonic signal, or other types of electromagnetic wave signals including, but are not limited to, Ultra-Wide Band (UWB), or an electromagnetic wave used for distance measurement based on time-of-flight.

FIG. 4A shows the wireless sensing based on the radar wave.

The transmitter transmits a radar signal. The radar signal may be reflected or absorbed when it encounters an obstacle during transmission. The reflected radar wave may be received by the receiver. Based on the received radar wave, the receiver may realize the functions, such as radar ranging, radar detection, or others, so as to know parameters such as the location, volume and/or shape of the obstacle.

The transmitter transmits a radar signal. The radar signal may be reflected or absorbed when it encounters an obstacle during transmission. The reflected radar wave may be received by the receiver. Based on the received radar wave, the receiver may realize the functions, such as radar ranging, radar detection, or others, so as to know parameters such as the location, volume and/or shape of the obstacle.

As illustrated in FIG. 4A, based on a time when the radar wave is transmitted and a time when the radar wave is received, a distance between the sensing object and the device where the transmitter and the receiver are located and a direction of the sensing object relative to the device where the transmitter and the receiver are located may be determined.

In an example, the specific use of the sensing service in embodiments of the disclosure includes, but is not limited to, at least one of the following:
detection of aircraft;
obstacle detection;
missile launch;
spaceship navigation;
maritime navigation;
autonomous driving;
weather detection; or
terrain detection.

In embodiments of the disclosure, the UE firstly sends the sensing request to the AMF. In this way, the AMF, as a function of access and mobility management for the UE, may select an appropriate SF, as required, for providing the sensing parameters to the UE.

The sensing request may be any request for requesting to provide the sensing parameters and/or the sensing service. The sensing request may be a Non-Access Stratum (NAS) message and/or an Access Stratum (AS) message.

The sensing request may include at least one of the following:
identifier (ID) information of the UE;
sensing object information;
service region information of the sensing service;
sensing duration information of the sensing service;
quality of service (QoS) requirement information of the sensing service;
identifier information of a candidate transmitter, in which the candidate transmitter is capable of transmitting the sensing signal;
identifier information of a candidate receiver, in which the candidate receiver is capable of receiving a reflected signal generated by the sensing signal acting on the sensing object and of outputting the sensing data based on the reflection signal;
identifier information of a candidate processor, in which the candidate processor is capable of determining a sensing result based on the sensing data; or
candidate sensing model information.

The sensing object information may be configured to describe any information about a sensing object targeted by the sensing service. For example, the sensing object information is used for describing characteristics, such as a structure and/or a shape, an approximate current location, or a device type, of the sensing object, such that the sensing service may configure, based on the sensing object information, sensing parameters that may be used for detecting the sensing object.

The identifier information of the UE may be used to uniquely determine the UE. The identifier information of the UE includes, but is not limited to, an International Mobile Equipment Identity (IMEI), a Temporary Mobile Subscriber Identity (TMSI), an Internet Protocol (IP) address, or a Media Access Control (MAC) address of the UE.

A sensing region is indicated by the service region information, due to the introduction of the mobile communication system including the base station, the region covered by the network may be divided into different regions, and there are different network devices in different regions, which may be used as processors of the sensing service to participate in the provision of the sensing service.

The sensing duration information of the sensing service is equivalent to, for example, limiting a provision time of the sensing service, so that it is also convenient for the sensing function to schedule available processors within the time duration to provide the wireless sensing service.

The QoS requirement of the sensing service is indicated by the QoS requirement information of the sensing service, and different uses or different scenarios have different QoS requirements for wireless sensing. For example, some sensing services allow relatively large delays, while some sensing services are sensitive to delays. As an example, in the intelligent driving or assisted driving scenario, road safety is involved, which allows smaller delay than the terrain detection.

As another example, when the wireless sensing is used for the distance detection and the obstacle detection, the distance accuracy requirement of the distance detection is different from the distance accuracy requirement of the obstacle detection, which are all reflected in the QoS requirements, and these may be indicated by the QoS requirement information.

Through the provision of the QoS requirement information, it is convenient for the SF on the network side to configure appropriate sensing parameters and schedule an appropriate processor to provide the sensing service.

In some embodiments, the initiator itself may act as the processor of the wireless sensing service or has known in advance some devices that may serve as the processor of the sensing service. At this time, the sensing request may carry the identifier information of the candidate initiator, the identifier information of candidate receiver, and the identifier information of the candidate processor.

The identifier information may be an equipment identity, such as an International Mobile Equipment Identity (IMEI) or temporarily allocated information. For example, assuming that the base station is a candidate transmitter or a candidate receiver of the wireless sensing, the identifier information may be a cell identification (ID) of a cell formed by the base station. The ID may specifically be a Physical Cell Identification (PCI).

The candidate sensing model information may indicate a requested sensing model expected to be used by the initiator or a sensing model recommended by the initiator based on a triggered scenario or a triggered application of the current sensing service.

For example, the processors of different sensing models are different; and/or the types of sensing signals of different sensing models are different.

The sensing request may carry one or more of the above information. Certainly, the sensing request may not carry the above information, but only carry a request signaling of the sensing service.

In some embodiments, request parameters may further include: consumer information. The consumer information is configured to indicate a consumer of the sensing service. The sensing result of the sensing service may be sent to the consumer for their use.

In one embodiment, the initiator and the consumer may be the same or different.

In an example, two mandatory fields and one or more optional fields are set in the sensing request. The two mandatory fields may carry the initiator information and the consumer information respectively, while other optional fields may carry various information such as the aforementioned sensing object information. Certainly, this is only an example, and the specific implementation is not limited thereto.

By carrying one or more of the above request parameters, it is convenient for the SF to determine the sensing parameters suitable for the current scenario, thereby ensuring the service quality of the sensing service.

For example, the sensing object information includes at least one of the following:
an area of the sensing object;
region information of the sensing object;
a location of the sensing object;
a volume of the sensing object;
a velocity of the sensed object.

In some embodiments, sensing objects with different areas and/or volumes may be used to determine parameters, such as the viewing angle and/or the power, for the transmitter to send the sensing signal.

The region information of the sensing object may indicate a region where the sensing object is currently located, such that the sensing service region may be conveniently determined.

The location of the sensing object may be used to determine the processor, for example, to select a suitable processor nearby to perform the sensing service.

The speed of the sensing object may have an impact on the successful provision of the sensing service. For example, a high-speed moving object has requirements on the transmitting power of the transmitter in the sensing service. In addition, due to the Doppler Effect generated by the movement of the sensing object, there are certain requirements on the processing capability of the processor for processing the sensing service.

In some embodiments, the sensing object information is not limited to the aforementioned area, position, volume and/or velocity, and the type of the sensing object may also be included. For example, the sensing object may be a static sensing object or a dynamic sensing object depending on whether the sensing object is capable of moving, or the sensing object may be a living object or a non-living object depending on whether the sensing object is living. For the living object, it may be necessary to consider the impact of the radar spot on the living body and the negative impact on the living body.

In conclusion, the initiator may send the request parameters through the sensing request, the SF may determine the sensing parameters based on the request parameters and/or network information other than the request parameters, and the processor may provide, based on the sensing parameters, the sensing service that is secure and whose service quality meets the requirement.

In some embodiments, one or more of the request parameters in the sensing request may also be used by the AMF to determine the target SF. For example, the AMF may select a SF within a sensing region corresponding to the location of the UE and/or the location of the sensing object as the target SF based on the location of the UE and/or the location of the sensing object indicated by the request parameters in the sensing request. As another example, the AMF may select a SF that provides a QoS indicated by the QoS requirement information as the target SF based on the QoS of the sensing service indicated by the request parameters in the sensing request. Certainly, the above are just examples.

The SF may be any functional entity on the network side. Specifically, the SF may serve as one of the network elements of the core network and/or the access network.

For example, the sensing function includes, but is not limited to, at least one of the following:
Access Function (AF);
Policy control Function (PCF);
Access Management Function (AMF) or other Network Functions (NFs).

Certainly, the above is only an example, and the specific implementation is not limited thereto. In some embodiments, the SF may be other network elements independent of the AF, AMF or PCF.

After the AMF determines the target SF, the AMF may directly forward the sensing request to the target SF or repackage the sensing request and send it to the target SF. The target SF may receive content contained in the sensing request to determine the sensing parameters. In this way, the UE may receive the sensing parameters sent by the target SF.

The sensing parameters may be: any parameter required by the processor who provides the sensing service. Specifically, the sensing parameters may include at least one of the following:
transmission parameters used for the transmitter to transmit the sensing signal;
receiving parameters used for the receiver to receive the sensing signal;
processing parameters used for the processor to process the sensing data corresponding to the sensing signal.

For example, the sensing parameters may also include at least one of the following:
a sensing duration for providing the sensing service, a sensing region, and an accuracy requirement of the sensing result.

The transmission parameters include, but are not limited to, a transmission power of the sensing signal, or a transmission frequency of the sensing signal.

The receiving parameters include, but are not limited to, a frequency of a receiving carrier of the sensing signal or a receiving duration.

The processing parameters include, but are not limited to, an upload parameter of the sensing data and/or identification information of a processing manner for processing the sensing data.

In some embodiments, the sensing model information indicates at least one of the following models:
a first sensing model where a base station is used as the transmitter and the receiver;
a second sensing model where UE(s) is used as the transmitter and the receiver;
a third sensing model where a base station is used as the transmitter and a UE is used as the receiver;
fourth sensing model where a UE is used as the transmitter and a base station is used as the receiver;
a fifth sensing model other than any of the first to fourth sensing models.

When the base station is the transmitter and the receiver, it is equivalent to that the sensing service is completely performed by the network elements of the mobile communication network system.

In the first sensing model, a processor may also be involved. The processor may be a base station, a computing device near the base station, or a UE. The computing device includes, but is not limited to, an edge computing device or a remotely connected computing device.

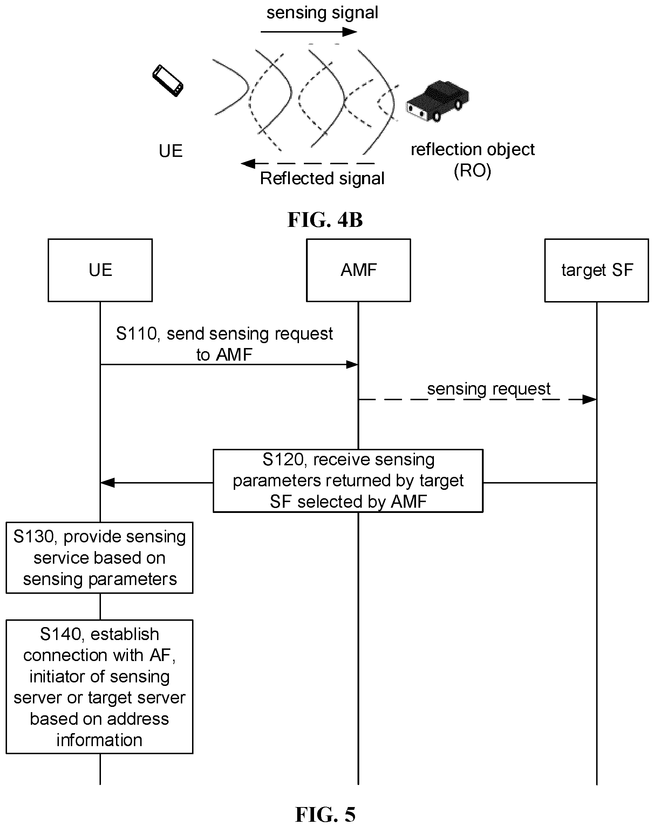

In the second sensing model where the UE is used as the transmitter and receiver, at least the transmission and reception of the sensing signal are performed by one or more UEs. In this case, the UE serving as the transmitter of the second sensing model and the UE serving as the receiver may be the same UE or different UEs. In embodiments of the disclosure, the UE sending the sensing request may be the transmitter, the receiver, or both the transmitter and the receiver. For example, the UE may act as the transmitter and the receiver at the same time. As illustrated in FIG. 4B, the UE may serve as the transmitter to send a sensing signal, a reflected signal is generated after the sensing signal hits a reflection object (RO), and the UE receives the reflected signal. The RO here may be the aforementioned "sensing object". In FIG. 4B, the solid line arrow indicates the transmission direction of the sensing signal and the dotted line arrow indicates the transmission direction of the reflected signal.

In the second sensing model, a processor may also be involved. The processor may be a UE, a base station, or a computing device connected to a base station. The computing device includes, but is not limited to, an edge computing device or a remotely connected computing device.

The third sensing model involves a base station and a UE, with the base station being used as the transmitter and the UE being used as the receiver. In this case, the base station, as a transmitter, may transmit the sensing signal to multiple UEs, thereby providing one-to-multiple sensing service and providing the sensing service to different UEs.

In the third sensing model, a processor may also be involved. The processor may be a UE, a base station, or a computing device connected to a base station. The computing device includes, but is not limited to, an edge computing device or a remotely connected computing device.

The fourth sensing model involves a base station and a UE, with the base station being used as the receiver and the UE being used as the transmitter. In this case, the base station, as the receiver, may receive sensing signals transmitted by multiple UEs at one time due to its strong receiving capability, so as to provide one-to-multiple sensing services, thereby providing the sensing service to different UEs.

In the fourth sensing model, a processor may also be involved. The processor may be a UE, a base station, or a computing device connected to a base station. The computing device includes, but is not limited to, an edge computing device or a remotely connected computing device.

The fifth sensing model may be any sensing model other than the aforementioned first to fourth sensing models.

For example, the fifth sensing model may include a sensing model involving multiple transmitters and/or multiple receivers, and the types of multiple transmitters may be different. For example, the transmitters include both the UE and the base station; and/or the receivers may include both the UE and the base station. Certainly, the device being used as the transmitter or the receiver includes, but is not limited to, the base station and/or the UE. In a specific implementation, the device being used as the transmitter and/or receiver may be a roadside device capable of establishing a connection with a base station or a UE, such as a roadside monitoring equipment capable of transmitting and receiving wireless signals. The monitoring equipment includes, but is not limited to, visual monitoring equipment based on the image acquisition.

The sensing parameters may be sent to the UE by, but is not limited to, a non-access stratum (NAS) message. For example, the SF may first transmit the sensing parameters to the base station connected to the UE, and then the base station transmits the sensing parameters to the UE through a radio resource control (RRC) message, a Medium Access Control Control Element (MAC CE) or downlink control information (DCI). The manner in which the UE receives the sensing parameters from the SF is not limited.

In embodiments of the disclosure, the UE may participate in the provision of the sensing service. For example, the block S130 may include at least one of the following:
transmitting a sensing signal based on transmitting parameters in the sensing parameters;
receiving a reflected signal formed through reflecting the sensing signal by a sensing object based on receiving parameters in the sensing parameters to obtain the sensing data;
processing the sensing data to obtain a sensing result.

When participating in the provision of the sensing service, the UE may act as only the transmitter to send the sensing signal, or act as only the receiver to sense the signal, or act as only the processor to process the sensing data.

In some embodiments, the transmitter UE sending the sensing request may act as two or three of the transmitter, the receiver or the processor.

When the UE acts as the receiver, after the UE receives the reflected signal to form the sensing data, the UE does not process the sensing data. The UE may directly send the sensing data to the target SF, the AF, the initiator or the consumer of the sensing service.

Here, processing the sensing data to obtain the sensing result may include the following.

Preliminary processing is performed on the sensing data to obtain an intermediate result. The intermediate result does not include a final result indicating the distance, the orientation and/or the contour of the sensing object, but a non-final result obtained after some preliminary processing. The preliminary processing may include: valid data selection, abnormal data elimination, or preliminary result calculation for final result calculation. For example, invalid data is eliminated, and sensing data participating in the final result calculation is selected as the result of the preliminary processing and sent to the target SF, the AF, the initiator and/or the consumer.

The sensing data is processed to obtain the final result.

In one embodiment, the S130 may include:
sending the sensing data to the target SF;
   or,
sending the sensing data to the application function (AF) of the sensing service, the initiator of the sensing service or a target server.

The target server may be a consumer who consumes the sensing data or needs to consume the sensing result.

For example, taking the smart driving as an example, when a control mode of the smart driving is a remote control of the target server, the target server is the consumer that consumes the sensing data and/or the sensing result.

In some embodiments, the block S130 may include:
sending the sensing result to the target SF;
   or,
sending the sensing result to the AF, the initiator of the sensing service or the target server.

For example, the UE, as a processor, may perform the preliminary processing and/or the final processing on the sensing data, so as to generate the sensing result. At this time, the UE sends the sensing result to the target SF, and then the sensing result is sent by the target SF to the AF, the initiator of the sensing service or the target server. Or, the UE directly sends the sensing result to the AF, the initiator of the sensing service or the target server.

The sensing result includes: an intermediate result of the sensing data and/or a final processing result of the sensing data.

For example, the UE may process the sensing data in a predetermined manner to obtain the sensing result. The predetermined manner may be indicated by a manner parameter in the sensing parameters.

In some embodiments, the predetermined manner may include: a manner predefined by a standard protocol or a proprietary protocol.

In some other embodiments, the predetermined manner may include: a manner pre-negotiated between the UE and the target SF.

The predetermined manner may include at least one of the following:
a sampling manner for selecting, from the sensing data, data that needs to be sent to the target SF, the AF, the initiator of the sensing service, or the target server;
an abnormal exclusion manner for eliminating abnormal data;
a calculation manner for generating a final processing result based on the sensing data. The calculation manner includes, but is not limited to, a calculation manner for calculating a distance and/or an orientation based on the time-of-flight of the sensing signal.

In some embodiments, the sensing parameters further include: address information.

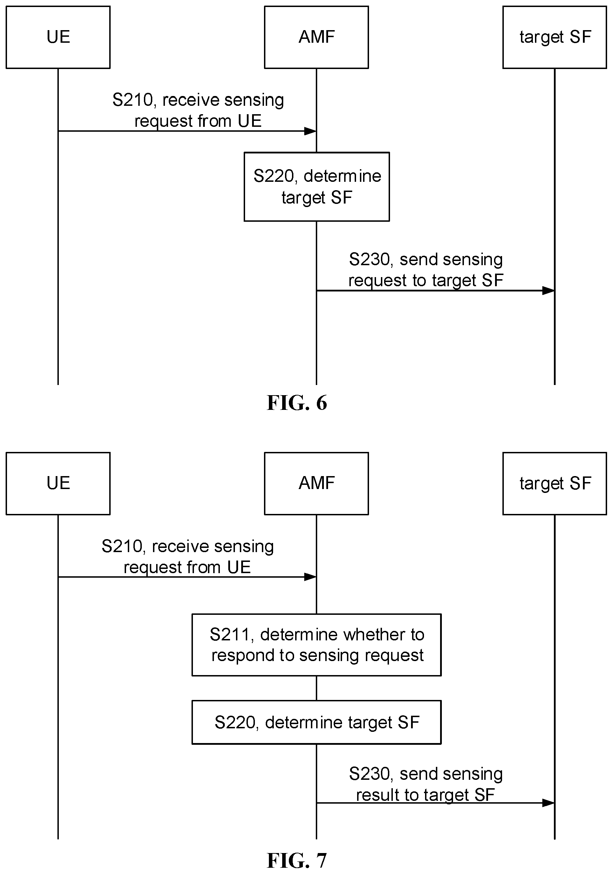

As illustrated in FIG. 6, the method also includes the following.

At block S 140, a connection is established with the AF, the initiator of the sensing service or the target server based on the address information. The connection may be at least used for delivering the sensing data and/or the sensing result.

When the sensing parameters include the address information, the connection is established with the AF, the initiator of the sensing service, or the target server.

For example, when the UE does not send the sensing data and/or the sensing result to the target SF, the target SF may carry the address information in the sensing parameters, so that the UE receives the address information and establish the connection with a network element corresponding to an address indicated by the address information. The connection includes, but is not limited to, a TCP connection or a UDP connection.

It is noteworthy that there is no certain sequence relationship between the block S 130 and the block S140. The connection may be established after executing the block S130, or the connection may be established before executing the block S130, or the connection may be established when the UE provides the sensing service based on the sensing parameters.

The connection may be: a Protocol Data Unit (PDU) connection corresponding to a PDU session that is negotiated to establish based on a PDU session establishment. The sensing data and/or the sensing result are delivered over the PDU connection established based on the PDU session.

As illustrated in FIG. 6, embodiments of the disclosure provide a method for providing a sensing service, performed by an AMF. The method includes the following.

At block S210, a sensing request from the UE is received.

At block S220, a target SF is determined.

At block S230, the sensing request is sent to the target SF.

In embodiments of the disclosure, after receiving the sensing request sent by the UE, the AMF may determine the target SF and send the sensing request to the target SF, so that the target SF may determine the sensing parameters based on the sensing request.

In some embodiments, as illustrated in FIG. 7, the method further includes the following.

At block S211, it is determined whether to respond to the sensing request.

The block S220 may include: when determining to respond to the sensing request, determining the target SF.

In order to ensure the security and reliability of providing the sensing service, after receiving the sensing request, the AMF may not directly respond to the sensing request, but determine whether to respond to the sensing request. For example, the AMF determines whether to respond to the sensing request based on the request parameters included in the sensing request.

The target SF is determined only when determining to respond to the sensing request. When it is determined to not respond to the sensing request, the AMF does not determine the target SF and a request rejection message is directly sent to the UE. The request rejection message may be a message solely indicating that the sensing request is rejected, or the request rejection message may be a rejection request message carrying a rejection reason. When the rejection request message carries the rejection reason, the UE may know the reason why the sensing request is rejected based on the rejection reason, and re-initiate the sensing request after removing an obstacle that causes the sensing request to be rejected.

In some embodiments, the block S211 may include at least one of the following:
determining not to respond to the sensing request when the network does not support providing the sensing service; and
determining to respond to the sensing request when the network supports providing the sensing service.

In some embodiments, when the network does not support the provision of the sensing service, it is determined that the sensing request cannot be responded to, and the response to the sensing request is rejected. When the sensing request is rejected, the request rejection message may be sent to the UE, which may carry a value indicating the reason why the network does not support providing the sensing service. The UE may not repeatedly send the sensing request after receiving the request rejection message carrying the value indicating the reason why the network does not support providing the sensing service.

In some other embodiments, when the network supports the provision of the sensing service, it may be directly determined to respond to the sensing request. Or, it is determined whether to respond to the sensing request based on other reference parameters, such as the request parameters, carried in the sensing request.

For example, determining to respond to the sensing request in response to the network supporting the provision of the sensing service includes at least one of the following:
determining to respond to the sensing request when the network supports the provision of the sensing service and the UE is subscribed to the sensing service;
determining to respond to the sensing request when the network supports providing the sensing service meeting the QoS indicated by the QoS information included in the sensing request;
determining to respond to the sensing request when the network supports providing the sensing service using the sensing model indicated by the sensing model information included in the sensing request.

The sensing request of the UE may also carry the QoS information, requested by the UE, indicating the QoS that the sensing service needs to meet. Even if the network supports providing the sensing service, when the network cannot provide the sensing service that meets the QoS requested by the UE, the AMF may still reject to respond to the sensing request.

In some embodiments, when the UE requests the sensing service, the UE may give a recommended sensing model. Even if the current network side supports the provision of the sensing service, when the current network device does not support the sensing service using the recommended sensing model given by the UE, the current network side may still reject to respond to the sensing request, and when the current network side supports the sensing service using the recommended sensing model given by the UE, the current network side may determine to respond to the sensing request.

In some embodiments, determining whether to respond to the sensing request further includes:
sending request information to a User Data Management (UDM); in which the request information at least includes the identifier information of the UE; and
receiving feedback information returned, based on the identifier information, from the UDM, in which the feedback information indicates whether the UE is subscribed to the sensing service.

Depending on whether the UE is subscribed to the sensing service, the UDM has subscription data. The AMF may send the request information to the UDM to check whether the UE is subscribed to the sensing service or whether the UE has the sensing service meeting the QoS requested by the UE, or whether the UE has the sensing service using the sensing model recommended by the UE.

In an embodiment, the feedback information may include: a checking result directly indicating whether the UE is subscribed to the sensing service.

In another embodiment, the feedback information may further include: subscription data of the UE. The subscription data indirectly indicates whether the UE is subscribed to the sensing service. When the subscription data is received by the AMF, the AMF needs to determine whether the UE is subscribed to the sensing service through the subscription data.

In some embodiments, the request information further includes: QoS information and/or sensing model information included in the sensing request.

The QoS information is used for the UDM to determine whether the UE is subscribed to a sensing service that meets the QoS information.

The sensing model information is used for the UDM to determine whether the UE is subscribed to a sensing service using the sensing model indicated by the sensing model information.

When the UE is subscribed to the sensing service meeting the QoS information, it means that the UE has the right to request the sensing service indicated by the QoS information.

For example, when the precisions of sensing services for positioning the sensing object indicated by the QoS information are different, the QoS levels are different.

In another example, when guaranteed bandwidths for the sensing services indicated by the QoS information are different, the QoS levels are different.

Certainly, the description is described above by taking the QoS information as an example, and the specific implementation is not limited to the above examples.

In one embodiment, the block S220 may include: selecting a target SF from candidate SFs that may provide the sensing service based on at least one of the sensing request, the SF selection configuration of the AMF, or the network discovery mechanism.

In an embodiment, the AMF may directly determine the target SF based on the sensing request. For example, determining the target SF based on the sensing request may include:
determining a sensing region where the UE is located based on the identifier information of the UE contained in the sensing request, selecting one or more candidate SFs from the sensing region, and determining the one or more candidate SFs as the target SF;
determining the target SF based on SF information indicated by the sensing request, in which the SF information includes, but is not limited to, identifier information of the SF.

The SF selection configuration may include:
an SF selection configuration locally stored in the AMF;
   and/or,
an SF selection configuration requested from the PCF.

When the AMF locally stores an SF selection policy, the AMF may determine the target SF based on only the SF selection policy or determine the target SF based on the sensing request and the SF selection policy.

When the AMF does not store the SF selection configuration locally, the AMF requests the SF selection policy from the PCF, and receives policy information of the SF selection policy returned by the PCF to determine the target SF based on only the SF selection policy or jointly determine the target SF based on the sensing request and the policy information of the SF selection policy returned by the PCF.

The AMF may also determine the target SF based on the network discovery mechanism, including, but not limited to, at least one of the following:
discovering, by the AMF based on only the network discovery mechanism, the target SF that may provide the sensing service;
discovering, by the AMF based on the sensing request and the network discovery mechanism, the target SF that may provide the sensing service requested by the request parameters of the sensing request.

Discovering the target SF based on the discovery mechanism may include, but is not limited to, at least one of the following:
sending, by the AMF, a request message to a Network Repository Function (NRF); in which the request message may include attribute information of the target SF that the AMF needs to discover;
receiving a response message returned by the NRF, in which the response message may carry: SF information on a SF that may be used as the target SF inquired by the NRF based on the attribute information. The SF information includes, but is not limited to, the identifier information of the SF and/or address information of the SF.

In one embodiment, the attribute information may be determined based on the sensing request. For example, the attribute information indicates the sensing region where the target SF is located, the type of the supported sensing model, and the QoS of the sensing service that may be provided.

In another embodiment, the attribute information may independently indicate a service identifier of the sensing service, and the service identifier may be used by the NRF to determine candidate SFs capable of providing the sensing service.

For example, the target SF may have one of the following characteristics:
the target SF being located in the same sensing region as the UE;
the target SF being located in the same sensing region as the sensing object;
the target SF being an SF closest to the UE and supporting the provision of the sensing service requested by the UE;
the target SF being an SF closest to the AF of the sensing service or to the target server;
the target SF being an SF located in the same sensing region as the AF of the sensing service or as the target server;
the target SF being an SF suggested by the UE.

In embodiments of the disclosure, the AMF determines the target SF that responds to the sensing request based on at least one of the sensing request, the SF selection policy and the network discovery mechanism.

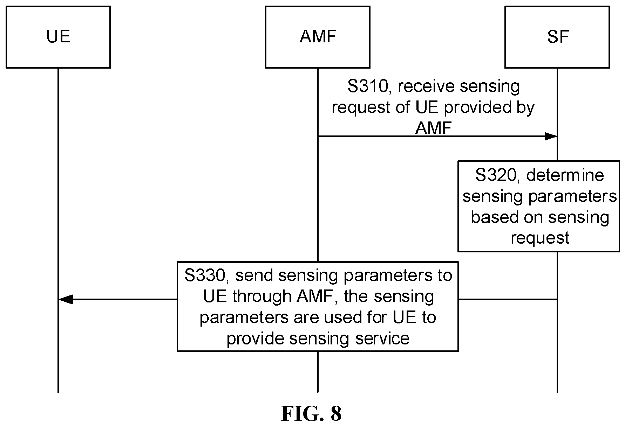

As illustrated in FIG. 8, embodiments of the disclosure provide a method for providing a sensing service, performed by the SF. The method includes the following.

At block S310, a sensing request of the UE provided by the AMF is received.

At block S320, sensing parameters are determined based on the sensing request.

At block S330, the sensing parameters are sent to the UE through the AMF, in which the sensing parameters are used for the UE to provide a sensing service.

After receiving the sensing request of the UE forwarded by the AMF, the SF may determine the sensing parameters based on the sensing request, and return the determined sensing parameters to the UE for the UE to provide the sensing service.

For the request parameters contained in the sensing request, reference may be made to the description of corresponding embodiments, which will not be repeated here.

The sensing parameters may include at least one of the following:
transmission parameters, in which the transmission parameters indicate, for example, a type of a transmitted sensing signal, a transmission frequency, a general transmission direction and/or a transmission duration;
receiving parameters, in which the receiving parameters indicate, for example, a receiving duration and/or a receiving frequency; or
processing parameters, in which the processing parameters indicate, for example, a predetermined manner of processing the sensing data.

In some embodiments, the sensing request at least includes: identifier information of the UE. The method may include:
performing a verification based on the identifier information of the UE;

The block S320 may include: determining the sensing parameter after the verification is passed.

The security of the sensing service may be ensured through the verification. The security includes: the security of the service provision process and/or the privacy security. The verification is performed on the identifier information of the UE, and the sensing parameters are determined after the identifier information of the UE passes the verification. When the identifier information of the UE does not pass the verification, the sensing parameters are not provided.

Certainly, in the case where the verification on the identifier information of the UE has been completed by the AMF, the SF may not need to perform any verification again, but directly determines the sensing parameters based on the sensing request.

The SF may perform a local verification or request the UDM to perform a remote verification.

When the remote verification is performed by the UDM, performing the verification based on the identifier information of the UE includes:
sending a subscription check request to the UDM based on the sensing request, in which the subscription check request at least includes the identifier information of the UE; and
receiving a check result returned by the UDM.

For example, the subscription check request is sent to the UDM based on the sensing request. After receiving the subscription check request, the UDM checks the subscription data based on the identifier information of the UE, to obtain the check result.

In one embodiment, the check result may include a verification result, and the verification result may indicate whether the verification is passed.

In another embodiment, the check result may include: the checked subscription data, and the SF generates a verification result of whether the verification is passed by processing the subscription information after receiving the subscription data. When the returned subscription data indicates that the UE is not subscribed to the sensing service, the verification result indicates that the verification fails (that is, the verification is not passed). When the returned subscription data indicates that the UE is subscribed to the sensing service, the verification result indicates that the verification is passed.

In some embodiments, the sensing request further includes: sensing model information at least indicating the requested sensing model expected to be used by the sensing request.

The subscription check request further includes: the sensing model information.

The check result is returned based on the identifier information of the initiator and the sensing model information.

For example, the sensing request includes the sensing model information, and the sensing model information indicates the sensing model requested by the UE. When the UDM finds, based on the subscription information, that the UE is not subscribed to the sensing service using the sensing model requested by the UDM, the check result may indicate that the verification is not passed. When the UDM finds, based on the subscription information, that the UE is subscribed to the sensing service using the sensing model requested by the UDM, the check result indicates that the verification is passed.

In one embodiment, the verification includes:
authentication verification;
   and/or,
privacy security verification.

The authentication verification is a verification on whether the UE has a right to obtain the sensing service, and/or a verification on what kind of sensing service the UE has a right to obtain.

The privacy security verification is an information security issue to verify whether the request for the UE to obtain the sensing service will cause the exposure of the privacy of other users or a user corresponding to the UE. When the request does not cause the exposure of the privacy, it is determined that the privacy security verification is passed. When the request causes the exposure of the privacy, it is determined that the privacy security verification is not passed.

In some embodiments, the block S320 may include:
determining the sensing parameters based on at least one of the sensing request and policy parameters.

The sensing parameters are determined based on candidate parameters provided by the sensing request. As an example, at least one of candidate parameters is determined as the sensing parameters. As another example, a processor that provides the sensing service is determined and the sensing model that provides the sensing service is determined based on identifier information of the candidate model carried in the sensing request and device information of the candidate device.

Determining the sensing parameter based on the policy parameters may include:
randomly determining a set of candidate parameters or selecting a set of candidate parameters in a predefined manner as the sensing parameters based on one or more sets of candidate parameters provided by the policy parameters;
   and/or,
selecting a set of parameters from a range of sensing parameters defined by the policy parameters as the sensing parameters based on the range of sensing parameters defined by the policy parameters.

Determining the sensing parameters based on the sensing request and the policy parameters may include at least one of the following:
determining whether a candidate parameter provided by the sensing request is included in the policy parameters, and when the candidate parameter is included in the policy parameters, determining the candidate parameter as the sensing parameter; and/or, when the candidate parameter is not included in the policy parameters, randomly selecting a set of parameters from the policy parameters as the sensing parameters, or selecting a set of parameters closest to the candidate parameter among the policy parameters as the sensing parameters.

The above is just an example of determining the sensing parameters based on at least one of the sensing request and the policy parameters, and the specific implementation is not limited to the above example.

In some embodiments, the policy parameters include:
local policy parameters of the SF; and
policy parameters provided by the a Policy Control Function (PCF).

The policy parameters may be stored locally by the SF, or may be requested from the PCF.

The local policy parameters of the SF may be pre-configured in the SF, or may be transferred to the SF after being requested from the PCF last time and locally stored on the SF.

When the SF does not store any policy parameters locally, the SF may request the policy parameters from the PCF, or when priority of the policy parameters stored locally in the SF is relatively low, the SF may request the policy parameters with higher priority from the PCF.

Certainly, the above is only an example to describe a source and/or an acquisition method of the policy parameters, and the specific implementation is not limited to this example.

In some embodiments, determining the sensing parameters based on at least one of the sensing request and the policy parameters includes:
sending a policy request to the PCF based on the sensing request;
receiving a policy response returned by the PCF; in which the policy response includes the policy parameters provided by the PCF; and
determining the sensing parameters based on the policy response.

A method of requesting the policy parameters from the PCF may be sending a policy request to the PCF. The policy request may be at UE granularity or at UE group granularity. When the policy request is at the UE granularity, the policy request carries the identifier information of the corresponding UE, and when the policy request is at the UE group granularity, the policy request carries group identifier information of the UE group. When the policy request is at the UE granularity, the policy parameters returned in the policy response are only applicable to the corresponding UE. When the policy request is at the UE group granularity, the policy parameters returned in the policy response are for all UEs contained in the UE group. One UE group may include one or more UEs.

In an embodiment, the sensing request includes the identifier information of the UE.

The policy request includes the identifier information of the UE; in which the policy response is returned based on the identifier information of the UE.

The policy request carries the identifier information of the UE, and the PCF may return a policy response for the UE based on the identifier information of the UE.

In some embodiments, the method also includes:
receiving sensing data sent by the UE;
processing the sensing parameters to obtain a sensing result; and
sending the sensing result to the AF or the initiator of the sensing service.

The initiator of the sensing service may be the aforementioned UE, or an application server of the UE.

In embodiments of the disclosure, the SF may receive the sensing data obtained from the UE providing the sensing service based on the sensing parameters, process the sensing data in a predetermined way to obtain the sensing result, and send the sensing result to the AF or the initiator of the sensing service.

In some embodiments, the method also includes:
receiving sensing data sent by the UE; and
sending the sensing data to the AF or the initiator of the sensing service.

After receiving the sensing data, the SF may not process the sensing data, but directly forward the sensing data to the AF or the initiator of the sensing service. In this way, the AF and/or the initiator may process the sensing data to obtain the sensing result.

Embodiments of the disclosure provide a method for supporting a sensing service through UE enhancement. That is, the SF receives the sensing service request initiated by the UE, determines whether the UE is authorized to establish the sensing service, and determines the parameter configurations and the policy information related to the transmission and reception required by the UE to implement the sensing service.

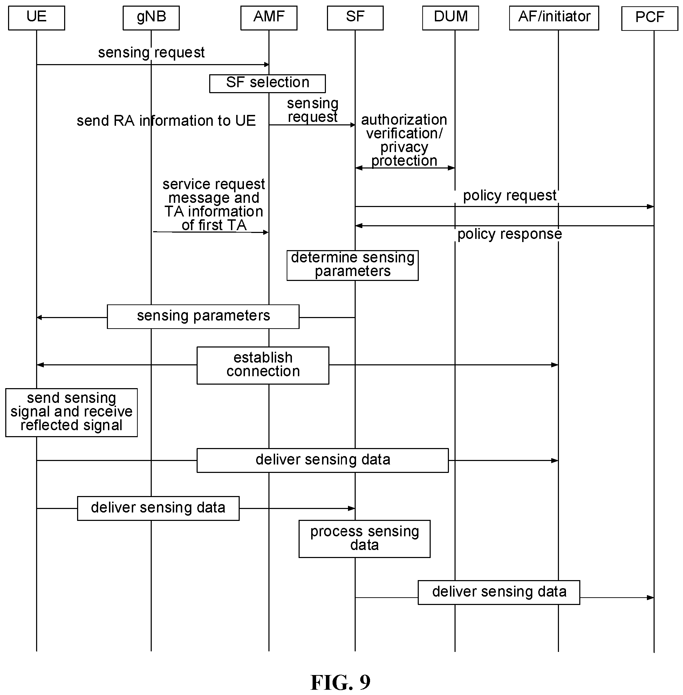

As illustrated in FIG. 9, embodiments of the disclosure provide a method for providing a sensing service through UE enhancement. The method includes the following.

The UE sends a sensing request to the AMF. The sensing request includes:
an ID of the UE;
sensing model information;
object information of a sensing object, in which the object information indicates, but is not limited to, at least one of a position of the sensing object, an object size and/or a speed of the sensing target;
sensing duration information, indicating a time duration for providing the sensing service; or
sensing field information, indicating a field where the sensing service is applied.

The AMF selects an SF based on a UE requirements/a local configuration.

The request will be rejected when the network does not support the sensing service, or the network does not support the sensing model requested by the UE, or for other reasons. In some examples, the AMF requests to the UDM whether the UE is subscribed to the sensing service.

The AMF sends a sensing request to the SF. The sensing request includes: the ID of the UE, the sensing model information and/or the QoS information. In some examples, the SF sends a check request to the UDM to perform a verification of checking whether the sensing request of the UE is allowed. When the AMF does not perform the verification, the SF sends a check request including the ID of the UE ID and/or the sensing model information to the UDM.

The SF selects the PCF and requests related policies from the PCF. The request message includes the ID of the UE.

The PCF feeds back a policy response, which includes the policy parameters.

The SF determines the sensing parameters of the UE based on the policy provided by the AMF or the PCF and/or the local policy and the sensing request of the UE. The sensing parameters may at least include: transmission parameters for the UE to transmit the sensing signal and/or receiving parameters for the UE to receive the reflected signal generated based on the sensing signal.

The SF sends the sensing parameters to the UE. The sensing parameters include: the transmission parameters and/or the receiving parameters. If necessary, the UE establishes a connection by initiating a PDU session. The connection may at least be used for the UE to send the sensing data and/or the sensing result to the AF, the initiator or the target sensing server.

The UE starts sending the sensing signal and receiving the reflected signal.

The UE collects the sensing data and delivers the sensing data to the SF for further processing. Or, the UE collects the sensing data and delivers the sensing data to the AF, the initiator or the target server.

The SF collects the sensing data and handles the data based on a defined way.

The SF sends the sensing data to the AF and/or the initiator.

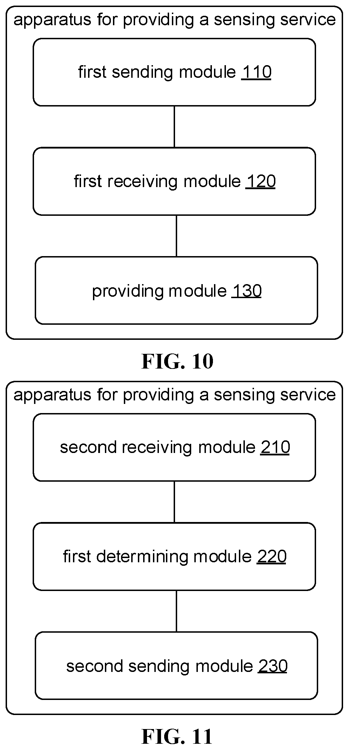

As illustrated in FIG. 10, embodiments of the disclosure provide a device for providing a sensing service. The device includes:
a first sending module 110, configured to send a sensing request to an AMF;
a first receiving module 120, configured to receive sensing parameters returned by a target SF selected by the AMF; and
a providing module 130, configured to provide a sensing service based on the sensing parameters.

In some embodiments, the first sending module 110, the first receiving module 120, and the providing module 130 may be program modules. After the program modules are executed by the processor, the sensing request is sent to the AMF, the sensing parameters returned by the target SF are received, and the sensing service is provided based on the sensing parameters.

In some other embodiments, the first sending module 110, the first receiving module 120 and the providing module 130 may be a hardware-software combined module. The hardware-software combined module includes, but is not limited to, various programmable arrays. The programmable array includes, but is not limited to, a field programmable array and/or a complex programmable array.

In some other embodiments, the first sending module 110, the first receiving module 120 and the providing module 130 may be pure-hardware modules; the pure-hardware module includes, but is not limited to, an application specific integrated circuit.

In some embodiments, the sensing request includes at least one of the following:
identifier information of the UE;
sensing model information indicating a sensing model providing the sensing service;
object information of a sensing object;

QoS information indicating QoS of the sensing service.

In some embodiments, the sensing model includes at least one of the following:
a first sensing model where the base station is used as a transmitter and a receiver;
a second sensing model where the UE is used as the transmitter and the receiver;
a third sensing model where the base station is used as the transmitter and the UE is used as the receiver;
a fourth sensing model where the UE is used as the transmitter and the base station is used as the receiver;
a fifth sensing model other than the first to fourth sensing models.

In some embodiments, the object information indicates at least one of the following:
a region where the sensing object is located;
a type of the sensing object;
a moving speed of the sensing object; or
a volume of the sensing object.

In some embodiments, the providing module 130 is configured to perform at least one of the following:
transmitting a sensing signal based on transmitting parameters in the sensing parameters;
receiving a reflected signal generated from reflecting the sensing signal by the sensing object based on receiving parameters in the sensing parameters, to obtain sensing data; or
processing the sensing data to obtain a sensing result.

In some embodiments, the providing module 130 is further configured to send the sensing data to the target SF, or send the sensing data to an AF of the sensing service, an initiator of the sensing service or a target server.

In some embodiments, the providing module 130 is configured to send the sensing result to the target SF, or send the sensing result to the AF, the initiator of the sensing service or the target server.

In some embodiments, the sensing result includes: an intermediate result of the sensing data, and/or a final processing result of the sensing data.

In some embodiments, the sensing parameters further include: address information.

The method also includes:
establishing a connection with the AF, the initiator of the sensing service or the target service based on the address information, in which the connection is at least used for delivering the sensing data and/or the sensing result.

As illustrated in FIG. 11, embodiments of the disclosure provide an apparatus for providing a sensing service, performed by an AMF. The apparatus includes:
a second receiving module 210, configured to receive a sensing request from the UE;
a first determining module 220, configured to determine a target SF; and
a second sending module 230, configured to send the sensing request to the target SF.

In some embodiments, the second receiving module 210, the first determining module 220, and the second sending module 230 may be program modules. After the program modules are executed by the processor, the sensing request of the UE is received, the target SF is determined, and the sensing request is sent to the target SF.

In some other embodiments, the second receiving module 210, the first determining module 220, and the second sending module 230 may be a hardware-software combined module. The hardware-software combined module includes, but is not limited to, various programmable arrays. The programmable array includes, but is not limited to: a field programmable array and/or a complex programmable array.

In some other embodiments, the second receiving module 210, the first determining module 220 and the second sending module 230 may be pure-hardware modules. The pure-hardware module includes, but is not limited to, an application specific integrated circuit.

In some embodiments, the apparatus also includes:
a second determining module, configured to determine whether to respond to the sensing request.

The first determining module 220 is configured to determine the target SF when it is determined to respond to the sensing request.

In some embodiments, the second determining module is configured to perform at least one of the following:
determining not to respond to the sensing request when the network does not support providing the sensing service; or
determining to respond to the sensing request when the network supports providing the sensing service.

In some embodiments, the second determining module is configured to perform at least one of the following:
determining to respond to the sensing request when the network supports providing the sensing service and the UE is subscribed to the sensing service;
determining to respond to the sensing request when the network supports providing the sensing service meeting a quality of service (QoS) indicated by the QoS information included in the sensing request; or
determining to respond to the sensing request when the network supports providing the sensing service using a sensing model indicated by sensing model information included in the sensing request.

In some embodiments, the second determining module is configured to send request information to a UDM; in which the request information includes at least identifier information of the UE; and receiving feedback information returned, based on the identifier information, from the UDM, in which the feedback information indicates whether the UE is subscribed to the sensing service.

In some embodiments, the request information further includes: QoS information and/or sensing model information included in the sensing request.

The QoS information is used for the UDM to determine whether the UE is subscribed to the sensing service meeting the QoS information.

The sensing model information is used for the UDM to determine whether the UE is subscribed to the sensing service using the sensing model indicated by the sensing model information.

In some embodiments, the first determining module 220 is configured to select the target SF from candidate SFs capable of providing the sensing service based on at least one of the sensing request, an SF selection configuration of the AMF, and a network discovery mechanism, .

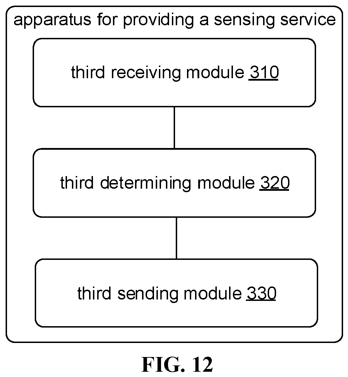

As illustrated in FIG. 12, embodiments of the disclosure provide an apparatus for providing a sensing service. The apparatus includes:
a third receiving module 310, configured to receive a sensing request of the UE provided by the AMF;
a third determining module 320, configured to determine sensing parameters based on the sensing request; and
a third sending module 330, configured to send the sensing parameters to the UE through the AMF, in which the sensing parameters are used for the UE to provide a sensing service.

In some embodiments, the third receiving module 310, the third determining module 320 and the third sending module 330 may be program modules. After the program modules are executed by the processor, the functions of the above modules may be realized.

In other embodiments, the third receiving module 310, the third determining module 320, and the third sending module 330 may be hardware-software combined modules. The hardware-software combined module includes, but is not limited to, various programmable arrays. The programmable array includes, but is not limited to: a field programmable array and/or a complex programmable array.

In some other embodiments, the third receiving module 310, the third determining module 320 and the third sending module 330 may be pure-hardware modules. The pure-hardware module includes, but is not limited to, an application specific integrated circuit.

In some embodiments, the sensing request at least includes: identifier information of the UE. The apparatus further includes:
a verification module, configured to perform a verification based on the identifier information of the UE.

The third determining module 320 is configured to determine the sensing parameters after passing the verification.

In some embodiments, the verification module is configured to send a subscription check request to a UDM based on the sensing request, in which the subscription check request at least includes: identifier information of the UE, and receiving a check result returned by the UDM.

In some embodiments, the sensing request further includes: sensing model information, at least indicating a requested sensing model expected to be used by the sensing request.

The subscription check request also includes: the sensing model information.

The check result is returned based on the identifier information of the initiator and the sensing model information.

In some embodiments, the verification includes:
an authentication verification;
   and/or,
a privacy security verification.

In some embodiments, the third determining module 320 is configured to determine the sensing parameters based on at least one of the sensing request and policy parameters.

In some embodiments, the policy parameters include:
local policy parameters of the SF; or
policy parameters provided by the PCF.

In some embodiments, the third determining module 320 is configured to send a policy request to the PCF based on the sensing request; receive a policy response returned by the PCF; in which the policy response includes the policy parameters provided by the PCF; and determining the sensing parameters based on the policy response.

In some embodiments, the sensing request includes: identifier information of the UE;

The policy request includes the identifier information of the UE; in which the policy response is returned based on the identifier information of the UE.

In some embodiments, the apparatus further includes:
a fourth receiving module, configured to receive sensing data sent by the UE;
a processing module, configured to process the sensing parameters to obtain a sensing result; and
a fourth sending module, configured to send the sensing result to the AF or the initiator of the sensing service.

In some embodiments, the apparatus further includes:
a fifth receiving module, configured to receive sensing data sent by the UE; and
a fifth sending module, configured to send the sensing data to the AF or the initiator of the sensing service.

Embodiments of the disclosure provide a communication device. The communication device includes:
a memory for storing processor-executable instructions; and
a processor, connected to the memory;
in which the processor is configured to perform the method for providing a sensing service according to any of foregoing technical solutions.

The processor may include various types of storage media. The storage medium may be a non-transitory computer storage medium, and may continue to memorize and store information thereon after the communication device is powered off.

Here, the communication device includes: a UE or a network element. The network element includes, but is not limited to: a network element of the core network, such as the AMF, the SF, the PCF and/or the UDM.

The processor may be connected to the memory through a bus, for reading the executable program stored on the memory, for example, at least one of the methods illustrated in FIG. 3, FIG. 6 to FIG. 9.

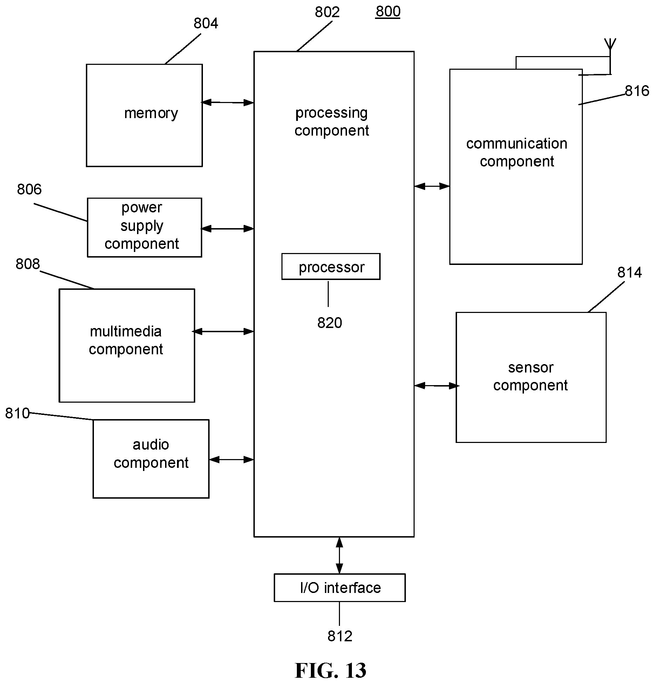

FIG. 13 is a block diagram illustrating a UE 800 according to an embodiment. For example, the UE 800 may be a mobile phone, a computer, a digital broadcast UE, a messaging device, a game console, a tablet device, a medical device, a fitness device, a personal digital assistant, or others.

As illustrated in FIG. 13, the UE 800 may include one or more of following components: a processing component 802, a memory 804, a power supply component 806, a multimedia component 808, an audio component 810, an input/output (I/O) interface 812, a sensor component 814, and a communication component 816.

The processing component 802 generally controls the overall operations of the UE 800, such as those associated with display, phone calls, data communications, camera operations, and recording operations. The processing component 802 may include one or more processors 820 to execute instructions to complete all or part of the steps of the above methods. In addition, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support operations at the UE 800. Examples of such data include instructions for any application or methods operating on the UE 800, contact data, phonebook data, messages, pictures, videos, etc. The memory 804 may be implemented by any type of volatile or non-volatile storage device or their combination, such as static random access memory (SRAM), electrically erasable programmable read-only memory (EEPROM), erasable Programmable Read Only Memory (EPROM), Programmable Read Only Memory (PROM), Read Only Memory (ROM), Magnetic Memory, Flash Memory, Magnetic or Optical Disk.

The power supply component 806 provides power to various components of the UE 800. The power supply components 806 may include a power management system, one or more power supplies, and other components associated with generating, managing, and distributing power for the UE 800.

The multimedia component 808 includes a screen providing an output interface between the UE 800 and the user. In some embodiments, the screen may include a liquid crystal display (LCD) and a touch panel (TP). When the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or swipe action, but also detect duration and pressure associated with the touch or swipe action. In some embodiments, the multimedia component 808 includes a front-facing camera and/or a rear-facing camera. When the UE 800 is in an operation mode, such as a shooting mode or a video mode, the front-facing camera and/or the rear-facing camera may receive external multimedia data. Each front-facing camera and rear-facing camera may be a fixed optical lens system or have focal length and optical zoom capability.

The audio component 810 is configured to output and/or input audio signals. For example, the audio component 810 includes a microphone (MIC), which is configured to receive an external audio signal when the UE 800 is in an operation mode, such as a call mode, a recording mode, and a voice recognition mode. Received audio signals may be further stored in memory 804 or sent via communication component 816. In some embodiments, the audio component 810 also includes a speaker for outputting audio signals.

The I/O interface 812 provides an interface between the processing component 802 and a peripheral interface module, which may be a keyboard, a click wheel, a button, and the like. These buttons may include, but are not limited to: a home button, volume buttons, start button, and lock button.

The sensor component 814 includes one or more sensors for providing various aspects of status assessment for the UE 800. For example, the sensor component 814 may detect the open/closed state of the UE 800, the relative positioning of components, such as the display and the keypad of the UE 800. The sensor component 814 may also detect the position change of the UE 800 or a component of the UE 800, the presence or absence of the contact between the user and the UE 800, the orientation or the acceleration/deceleration and the temperature change of the UE 800. The sensor component 814 may include a proximity sensor configured to detect the presence of nearby objects in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communications between the UE 800 and other devices. The UE 800 may access wireless networks based on communication standards, such as WiFi^{™}, 2G or 3G, or a combination thereof. In an embodiment, the communication component 816 receives broadcast signals or broadcast related information from an external broadcast management system via a broadcast channel. In an embodiment, the communication component 816 also includes a near field communication (NFC) module to facilitate short-range communication. For example, the NFC module may be implemented based on Radio Frequency Identification (RFID) technology, Infrared Data Association (IrDA) technology, Ultra-Wide Band (UWB) technology, Bluetooth^{™} (BT) technology and other technologies.

In an embodiment, the UE 800 may be powered by one or more Application Specific Integrated Circuits (ASICs), Digital Signal Processors (DSPs), Digital Signal Processing Devices (DSPDs), Programmable Logic Devices (PLDs), Field Programmable Gates Arrays (FPGAs), controllers, microcontrollers, microprocessors or other electronic implementations for performing the methods described above.

In an embodiment, there is also provided a non-transitory computer-readable storage medium including instructions, such as the memory 804 including instructions, which may be executed by the processor 820 of the UE 800 to complete the above methods. For example, the non-transitory computer readable storage medium may be ROM, random access memory (RAM), CD-ROM, magnetic tape, floppy disk, optical data storage device, and the like.

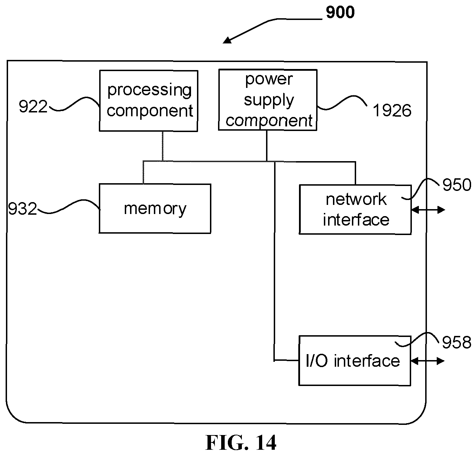

As illustrated in FIG. 14, embodiments of the disclosure illustrate a structure of an access device. For example, the communication device 900 may be provided as a network side device. The communication device may be the aforementioned UE and/or network element.

As illustrated in FIG. 14, the communication device 900 includes a processing component 922, which further includes one or more processors, and a memory resource represented by a memory 932 for storing instructions executable by the processing component 922, such as application programs. The application program stored in the memory 932 may include one or more modules each corresponding to a set of instructions. In addition, the processing component 922 is configured to execute instructions to perform any of the aforementioned methods applied to the access device, for example, at least one of the methods shown in FIG. 3, FIG. 6 to FIG. 9.

The communication device 900 may also include a power supply component 926 configured to perform power management of the communication device 900, a wired or wireless network interface 950 configured to connect the communication device 900 to a network, and an input output (I/O) interface 958. The communication device 900 may operate based on an operating system stored in the memory 932, such as Windows Server^{™}, Mac OS X^{™}, Unix^{™}, Linux^{™}, FreeBSD^{™} or the like.

Other embodiments of the disclosure will be readily apparent to those skilled in the art from consideration of the specification and practice of the disclosure herein. The disclosure is intended to cover any modification, use or adaptation of the disclosure, these modifications, uses or adaptations follow the general principles of the disclosure and include common knowledge or conventional technical means in the technical field not disclosed in this disclosure. The specification and examples are to be considered illustrative only, with a true scope and spirit of the disclosure being indicated by the following claims.

It is understandable that the disclosure is not limited to the precise constructions which have been described above and shown in the accompanying drawings, and various modifications and changes may be made without departing from the scope thereof. The scope of the disclosure is limited only by the appended claims.

## Claims

1. A method for providing a sensing service, performed by a user equipment (UE), comprising:
sending a sensing request to an access management function (AMF);
receiving sensing parameters returned by a target sensing function (SF) selected by the AMF; and
providing the sensing service based on the sensing parameters.

2. The method of claim 1, wherein the sensing request comprises at least one of
identifier information of the UE;
sensing model information, indicating a sensing model providing the sensing service;
object information of a sensing object; or
quality of service (QoS) information, indicating a QoS of the sensing service.

3. The method of claim 2, wherein the sensing model comprises at least one of
a first sensing model where a base station is used as a transmitter and a receiver;
a second sensing model where the UE is used as the transmitter and the receiver;
a third sensing model where the base station is used as the transmitter and the UE is used as the receiver;
a fourth sensing model where the UE is used as the transmitter and the base station is used as the receiver; or
a fifth sensing model other than the first sensing model, the second sensing model, the third sensing model, and the fourth sensing model.

4. The method of claim 2, wherein the object information comprises at least one of
a region where the sensing object is located;
a type of the sensing object;
a moving speed of the sensing object; or
a volume of the sensing object.

5. The method of any one of claims 1 to 4, wherein providing the sensing service based on the sensing parameters comprises at least one of
transmitting a sensing signal based on a transmitting parameter contained in the sensing parameters;
receiving, based on a receiving parameter contained in the sensing parameters, a reflected signal generated from reflecting the sensing signal by a sensing object, to obtain sensing data; or
processing the sensing data to obtain a sensing result.

6. The method of any one of claims 1 to 4, wherein providing the sensing service based on the sensing parameters comprises:
sending sensing data to the target SF;
or
sending the sensing data to an application function (AF) of the sensing service, an initiator of the sensing service or a target server.

7. The method of claim 6, wherein providing the sensing service based on the sensing parameters comprises:
sending a sensing result to the target SF;
or
sending the sensing result to the AF, the initiator of the sensing service or the target server.

8. The method of any one of claims 5 to 7, wherein
the sensing result comprises an intermediate result of the sensing data and/or a final processing result of the sensing data.

9. The method of claim 8, further comprising:
establishing a connection with an application function (AF), an initiator of the sensing service or a target server based on address information contained in the sensing parameters, wherein the connection is at least used for delivering the sensing data and/or the sensing result.

10. A method for providing a sensing service, performed by an access management function (AMF), comprising:
receiving a sensing request from a user equipment (UE);
determining a target sensing function (SF); and
sending the sensing request to the target SF.

11. The method of claim 10, further comprising:
determining whether to respond to the sensing request;
wherein determining the target SF comprises: determining the target SF in response to determining to respond to the sensing request.

12. The method of claim 11, wherein determining whether to respond to the sensing request comprises at least one of:
determining not to respond to the sensing request in response to a network not supporting providing the sensing service; or
determining to respond to the sensing request in response to the network supporting providing the sensing service.

13. The method of claim 12, wherein determining to respond to the sensing request in response to the network supporting providing the sensing service comprises at least one of:
determining to respond to the sensing request in response to the network supporting providing the sensing service and the UE being subscribed to the sensing service;
determining to respond to the sensing request in response to the network supporting providing a sensing service meeting a quality of service (QoS) indicated by QoS information contained in the sensing request; or
determining to respond to the sensing request in response to the network supporting providing a sensing service using a sensing model indicated by sensing model information contained in the sensing request.

14. The method of claim 12, wherein determining whether to respond to the sensing request comprises:
sending request information to a user data management (UDM); wherein the request information at least comprises identifier information of the UE; and
receiving feedback information returned, based on the identifier information, from the UDM, wherein the feedback information is configured to indicate whether the UE is subscribed to the sensing service.

15. The method of claim 14, wherein the request information further comprises quality of service (QoS) information and/or sensing model information contained in the sensing request;
the QoS information is used for the UDM to determine whether the UE is subscribed to a sensing service meeting the QoS information; and
the sensing model information is used for the UDM to determine whether the UE is subscribed to a sensing service using a sensing model indicated by the sensing model information.

16. The method of any one of claims 10 to 15, wherein determining the target SF comprises:
selecting the target SF from candidate SFs capable of providing the sensing service based on at least one of the sensing request, an SF selection configuration of the AMF, or a network discovery mechanism.

17. A method for providing a sensing service, performed by a sensing function (SF), comprising:
receiving a sensing request of a user equipment (UE) provided by an access management function (AMF);
determining sensing parameters based on the sensing request; and
sending the sensing parameters to the UE through the AMF, wherein the sensing parameters are used for the UE to provide the sensing service.

18. The method of claim 17, further comprising:
performing a verification based on identifier information of the UE contained in the sensing request;
wherein determining the sensing parameters based on the sensing request comprises:
determining the sensing parameters after the verification is passed.

19. The method of claim 18, wherein performing the verification based on the identifier information of the UE contained in the sensing request comprises:
sending a subscription check request to a user data management (UDM) based on the sensing request, wherein the subscription check request at least comprises the identifier information of the UE; and
receiving a check result returned by the UDM.

20. The method of claim 19, wherein the sensing request further comprises sensing model information, wherein the sensing model information at least indicates a requested sensing model expected to be used by the sensing request;
the subscription check request further comprises the sensing model information; and
the check result is returned based on identifier information of an initiator and the sensing model information.

21. The method of claim 18, wherein the verification comprises:
an authentication verification;
and/or
a privacy security verification.

22. The method of any one of claims 17 to 21, wherein determining the sensing parameters based on the sensing request comprises:
determining the sensing parameters based on at least one of the sensing request and policy parameters.

23. The method of claim 22, wherein the policy parameters comprise:
local policy parameters of the SF; or
policy parameters provided by a policy control function (PCF).

24. The method of claim 23, wherein determining the sensing parameters based on at least one of the sensing request and the policy parameters comprises:
sending a policy request to the PCF based on the sensing request;
receiving a policy response returned by the PCF; wherein the policy response includes the policy parameters provided by the PCF; and
determining the sensing parameters based on the policy response.

25. The method of claim 24, wherein the sensing request comprises: identifier information of the UE; and
the policy request comprises the identifier information of the UE; and the policy response is returned based on the identifier information of the UE.

26. The method of any one of claims 17 to 25, further comprising:
receiving sensing data sent by the UE;
processing the sensing data to obtain a sensing result; and
sending the sensing result to an application function (AF) or an initiator of the sensing service.

27. The method of any one of claims 17 to 26, further comprising:
receiving sensing data sent by the UE; and
sending the sensing data to an application function (AF) or an initiator of the sensing service.

28. An apparatus for providing a sensing service, comprising:
a first sending module, configured to send a sensing request to an access management function (AMF);
a first receiving module, configured to receive sensing parameters returned by a target sensing function (SF) selected by the AMF; and
a providing module, configured to provide the sensing service based on the sensing parameters.

29. The apparatus of claim 28, wherein the sensing request comprises at least one of:
identifier information of the UE;
sensing model information, indicating a sensing model providing the sensing service;
object information of a sensing object; or
quality of service (QoS) information, indicating a QoS of the sensing service.

30. The apparatus of claim 29, wherein the sensing model comprises at least one of:
a first sensing model where a base station is used as a transmitter and a receiver;
a second sensing model where the UE is used as the transmitter and the receiver;
a third sensing model where the base station is used as the transmitter and the UE is used as the receiver;
a fourth sensing model where the UE is used as the transmitter and the base station is used as the receiver; or
a fifth sensing model other than the first sensing model, the second sensing model, the third sensing model, and the fourth sensing model.

31. The apparatus of claim 29, the object information comprises at least one of
a region where the sensing object is located;
a type of sensing object;
a moving speed of the sensing object; or
a volume of the sensing object.

32. The apparatus of any one of claims 28 to 31, wherein the providing module is configured to perform at least one of
transmitting a sensing signal based on a transmitting parameter contained in the sensing parameters;
receiving, based on a receiving parameter contained in the sensing parameters, a reflected signal generated from reflecting the sensing signal by a sensing object, to obtain sensing data; or
processing the sensing data to obtain a sensing result.

33. The apparatus of any one of claims 28 to 31, wherein the providing module is further configured to send sensing data to the target SF or send the sensing data to an application function (AF) of the sensing service, an initiator of the sensing service or a target server.

34. The apparatus of claim 33, wherein the providing module is configured to send a sensing result to the target SF, or send the sensing result to the AF, the initiator of the sensing service or the target server.

35. The apparatus of any one of claims 32 to 34, wherein
the sensing result comprises an intermediate result of the sensing data and/or a final processing result of the sensing data.

36. The apparatus of claim 35, wherein the providing module is further configured to establish a connection with an application function (AF), an initiator of the sensing service or a target server based on address information contained in the sensing parameters, wherein the connection is at least used for delivering the sensing data and/or the sensing result.

37. An apparatus for providing a sensing service, comprising:
a second receiving module, configured to receive a sensing request from a user equipment (UE);
a first determining module, configured to determine a target sensing function (SF); and
a second sending module, configured to send the sensing request to the target SF.

38. The apparatus of claim 37, further comprising:
a second determining module, configured to determine whether to respond to the sensing request;
wherein the first determining module is configured to determine the target SF in response to determining to respond to the sensing request.

39. The apparatus of claim 38, wherein the second determining module is configured to perform at least one of:
determining not to respond to the sensing request in response to a network not supporting providing the sensing service; or
determining to respond to the sensing request in response to the network supporting providing the sensing service.

40. The apparatus of claim 39, wherein the second determining module is configured to perform at least one of:
determining to respond to the sensing request in response to the network supporting providing the sensing service and the UE being subscribed to the sensing service;
determining to respond to the sensing request in response to the network supporting providing a sensing service meeting a quality of service (QoS) indicated by QoS information contained in the sensing request; or
determining to respond to the sensing request in response to the network supporting providing a sensing service using a sensing model indicated by sensing model information contained in the sensing request.

41. The apparatus of claim 39, wherein the second determining module is configured to send request information to a user data management (UDM); wherein the request information at least comprises identifier information of the UE; and receive feedback information returned, based on the identifier information, from the UDM, wherein the feedback information is configured to indicate whether the UE is subscribed to the sensing service.

42. The apparatus of claim 41, wherein the request information further comprises quality of service (QoS) information and/or sensing model information contained in the sensing request;
the QoS information is used for the UDM to determine whether the UE is subscribed to a sensing service meeting the QoS information; and
the sensing model information is used for the UDM to determine whether the UE is subscribed to a sensing service using a sensing model indicated by the sensing model information.

43. The apparatus of any one of claims 37 to 42, wherein the first determining module is configured to select the target SF from candidate SFs capable of providing the sensing service based on at least one of the sensing request, an SF selection configuration of the AMF, or a network discovery mechanism.

44. An apparatus for providing a sensing service, comprising:
a third receiving module, configured to receive a sensing request of a user equipment (UE) provided by an access management function (AMF);
a third determining module, configured to determine sensing parameters based on the sensing request; and
a third sending module, configured to send the sensing parameters to the UE through the AMF, wherein the sensing parameters are used for the UE to provide the sensing service.

45. The apparatus of claim 44, further comprising:
a verifying module, configured to perform a verification based on identifier information of the UE contained in the sensing request;
wherein the third determining module is configured to determine the sensing parameters after the verification is passed.

46. The apparatus of claim 45, wherein the verifying module is configured to send a subscription check request to a user data management (UDM) based on the sensing request, wherein the subscription check request at least comprises the identifier information of the UE; and receive a check result returned by the UDM.

47. The apparatus of claim 46, wherein the sensing request further comprises sensing model information, wherein the sensing model information at least indicates a requested sensing model expected to be used by the sensing request;
the subscription check request further comprises the sensing model information; and
the check result is returned based on identifier information of an initiator and the sensing model information.

48. The apparatus of claim 45, wherein the verification comprises:
an authentication verification;
and/or
a privacy security verification.

49. The apparatus of any one of claims 44 to 48, wherein the third determining module is configured to determine the sensing parameters based on at least one of the sensing request and policy parameters.

50. The apparatus of claim 49, wherein the policy parameters comprise:
local policy parameters of the SF; or
policy parameters provided by a policy control function (PCF).

51. The apparatus of claim 50, wherein the third determining module is configured to send a policy request to the PCF based on the sensing request; receive a policy response returned by the PCF; wherein the policy response includes the policy parameters provided by the PCF; and determine the sensing parameters based on the policy response

52. The apparatus of claim 50, wherein the sensing request comprises: identifier information of the UE; and
the policy request comprises the identifier information of the UE; and the policy response is returned based on the identifier information of the UE.

53. The apparatus of any one of claims 44 to 52, further comprising:
a fourth receiving module, configured to receive sensing data sent by the UE;
a processing module, configured to process the sensing data to obtain a sensing result; and
a fourth sending module, configured to send the sensing result to an application function (AF) or an initiator of the sensing service.

54. The apparatus of any one of claims 44 to 52, further comprising:
a fifth receiving module, configured to receive sensing data sent by the UE; and
a fifth sending module, configured to send the sensing data to an application function (AF) or an initiator of the sensing service.

55. A communication device, comprising a processor, a transceiver, a memory, and an executable program stored on the memory and capable of being run by the processor, wherein when the processor runs the executable program, the method of any one of 1 to 9, 10 to 16, and 17 to 27 is performed.

56. A computer storage medium, having an executable program stored thereon; after the executable program is executed by a processor, the method of any one of claims 1 to 9, 10 to 16, and 17 to 27 is performed.
